# EUROPÄISCHE PATENTSCHRIFT

(11) **EP 2 881 301 B1**
(45) Veröffentlichungstag und Bekanntmachung des Hinweises auf die Patenterteilung: **09.10.2019**
(21) Anmeldenummer: 13195606.2
(22) Anmeldetag: 04.12.2013
(51) Int. Cl.: B61D 25/00, B60J 3/00, E06B 9/264, B61D 1/00, B60J 1/10, B60J 1/20, E06B 9/24, H02J 7/35, H02S 40/22

(54) **Fahrgastraum-Seitenfenster für ein Fahrzeug**
Passenger compartment side window for a vehicle
Fenêtre latérale d'habitacle de véhicule

(43) Veröffentlichungstag der Anmeldung: 10.06.2015
(73) Patentinhaber: Siemens Mobility GmbH, 1210 Wien (AT)
(72) Erfinder: Bachmayer, Thomas, 1210 Wien (AT)
(74) Vertreter: Deffner, Rolf

(56) Entgegenhaltungen:
- EP-A1- 1 170 457
- WO-A1-00/31369
- WO-A1-2009/127115
- WO-A1-2010/133279
- WO-A1-2013/035160
- AT-B- 370 205
- DE-A1- 19 840 331
- JP-A- 2007 231 613

## Beschreibung

### Technisches Gebiet

Die Erfindung betrifft ein Fahrgastraum-Seitenfenster für ein Fahrzeug, insbesondere für ein Schienenfahrzeug, mit einem Einscheiben-Glas.

### Stand der Technik

Ein Fahrgastraum in einem öffentlichen Verkehrsmittel ist jener Bereich des Fahrzeugs, in dem sich die Fahrgäste aufhalten. Bei Einsatz des Verkehrsmittels in subtropischen und tropischen Klimazonen verursacht die Sonneneinstrahlung, die durch großflächige Seitenscheiben in den Fahrgastraum eintritt, eine unerwünschte Erwärmung. Insbesondere bei Schienenfahrzeugen, die in gleißenden Sonnenlicht kurz hintereinander liegende Haltestellen durchlaufen, erfordert die Klimatisierung des Innenraums eine entsprechend groß dimensionierte Klimaanlage. Dies erhöht die Kosten bei der Herstellung des Schienenfahrzeugs. Das vergleichsweise große Gewicht des Klimagerätes in Verbindung mit dem für die Klimatisierung erhöhten Energiebedarf führen zu erhöhten Betriebskosten.

Um einfallende Sonnenstrahlen vom Fahrgastraum eines Schienenfahrzeugs abzuschirmen ist bekannt, Fahrzeugscheiben als Doppelglas-Scheiben auszuführen, oder innenseitig an den Fahrgastraum-Seitenfenstern eine Rollo oder eine Jalousie anzubringen. Dadurch wird zwar das einfallende Sonnenlicht von den Fahrgästen weitgehend abgeschirmt, die auf Rollo und Jalousie einfallende Wärmestrahlung lässt sich aber nur zu einem geringen Maße vom Wageninneren fern halten.

Es sind bei Schienenfahrzeugen auch Glassysteme bekannt, bei denen auf ein Sicherheitsglas eine Sonnen- und Wärmeschutzbeschichtung aufgebracht ist. Bei rauen Umgebungsbedingungen und extrem hoher UV-Einstrahlung kann die Funktionsschicht aber im Laufe der Betriebsdauer Schaden nehmen, was den Isolations-Effekt mindert und einen entsprechenden Wartungsaufwand mit sich bringt.

Aus der internationalen Patentanmeldung WO2010133279A1 ist ein Gebäudefenster bekannt, welches eine doppelte Verglasung aufweist und bei welchem in dem Bereich zwischen den Glasscheiben horizontal ausgerichtete, mit einem festen Winkel geneigte Lamellen angeordnet sind und diese Lamellen als Fotovoltaikzellen ausgebildet sind.

Fahrzeugfenster, welche verstellbare Lamellen zur Justierung der Beschattung umfassen sind in der Schrift WO0031369A1 offenbart. Bei Gebäudeverglasungen sind aus der Schrift EP1170457A1 Glasscheiben mit einem Innenraum bekannt, in welchem reflektierende Einsätze angeordnet sind, welche die eintretende Wärmestrahlung reflektieren.

### Darstellung der Erfindung

Es ist eine Aufgabe der vorliegenden Erfindung ein Fahrgastraum-Seitenfenster für ein Fahrzeug, insbesondere für ein Schienenfahrzeug anzugeben, bei dem der solare Energieeintrag verringert ist und das kostengünstig in der Herstellung ist.

Die Erfindung ist definiert durch die Merkmale des Anspruchs 1.

Gemäß einem Grundgedanken der Erfindung ist das Fahrgastraum-Seitenfenster mit Reflektor-Lamellen ausgestattet, die in einem fest vorgegebenen Abstand und Neigungswinkel direkt in die Glasscheibe eingebettet sind. Dadurch wird erreicht, dass die Sonnenstrahlung, die auf einer in einem Neigungswinkel nach außen geneigten Reflektor-Lamelle einfällt, so reflektiert wird, dass sie nicht in den Fahrgastinnenraum trifft. Damit ist der solare Energieeintrag in den Innenraum des Fahrzeugs vergleichsweise geringer. Der Abstand zwischen Reflektor-Lamellen ist so bemessen, dass einerseits die Durchsicht vom Fahrgastinnenraum nach außen nicht zu stark eingeschränkt ist, zum anderen aber einfallende Sonnenstrahlen wirkungsvoll in den Außenraum zurückgeworfen werden. Der Abstand zwischen den einzelnen Lamellen kann dabei unterschiedlich groß sein, ebenso der Neigungswinkel. Von Vorteil erscheint lediglich, dass aus Gründen der Einfachheit sowohl Abstand und Neigungswinkel fix vorgegeben sind.

Von besonderem Vorteil kann dabei sein, wenn jede Reflektor-Lamelle gleichzeitig als Solar-Lamelle ausgebildet ist. Damit wird zum einen eine Beschattungsfunktion erreicht, zum anderen wird die einfallende Sonnenstrahlung in Solarenergie umgewandelt.

Hierbei kann von besonderem Vorteil sein, wenn diese durch Solar-Energie gewonnene elektrische Energie zum Beispiel zur Batterieladung herangezogen wird. Je stärker die Intensität der Sonnenstrahlung, desto mehr Energie steht zur Batterieladung zur Verfügung. Die solare Ladeleistung kann einen wesentlichen Beitrag für den Standby-Betrieb eines Zuges liefern.

Ein großer Vorteil dieser Variante der Erfindung ist also darin zu sehen, dass durch die Abschattung der Reflektor-Lamellen nicht nur der Energieeintrag in das Fahrzeuginnere stark reduziert werden kann, sondern gleichzeitig Energie für elektrische Verbraucher gewonnen wird.

Die Erfindung bezieht sich auch auf ein Schienenfahrzeug, das mit oben beschriebenen Fahrgastraum-Seitenfenstern ausgerüstet ist.

### Kurzbeschreibung der Zeichnungen

Zur weiteren Erläuterung der Erfindung wird im nachfolgenden Teil der Beschreibung auf Zeichnungen Bezug genommen, in denen weitere vorteilhafte Ausgestaltungen, Einzelheiten und Weiterbildungen der Erfindung anhand nicht einschränkender Ausführungsbeispiele zu entnehmen sind.

Es zeigen:

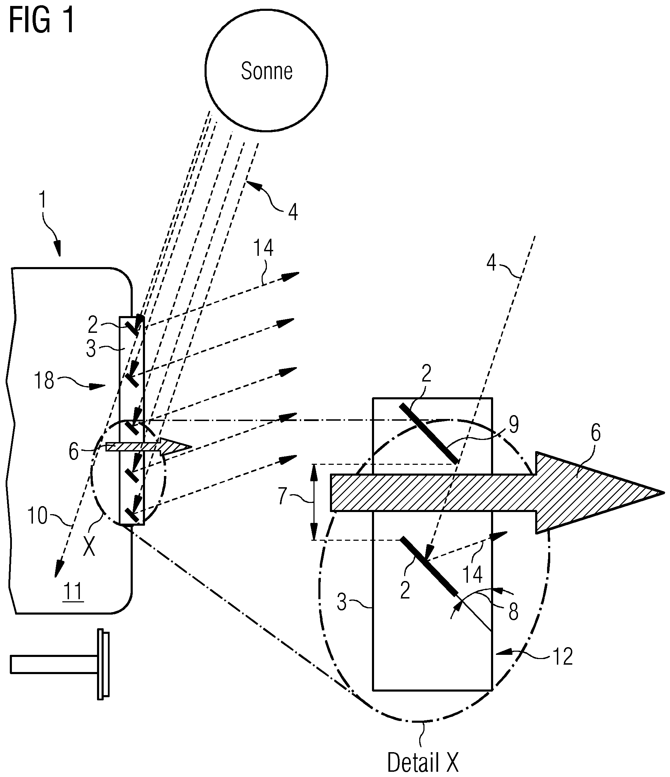

- Figur 1: einen schematischen Teilquerschnitt durch den Fahrgastraum eines Schienenfahrzeugs, wobei gemäß einem Ausführungsbeispiel der Erfindung Reflektor-Lamellen in einer Glasscheibe eines Fahrgastraum-Seitenfensters eingebettet sind;

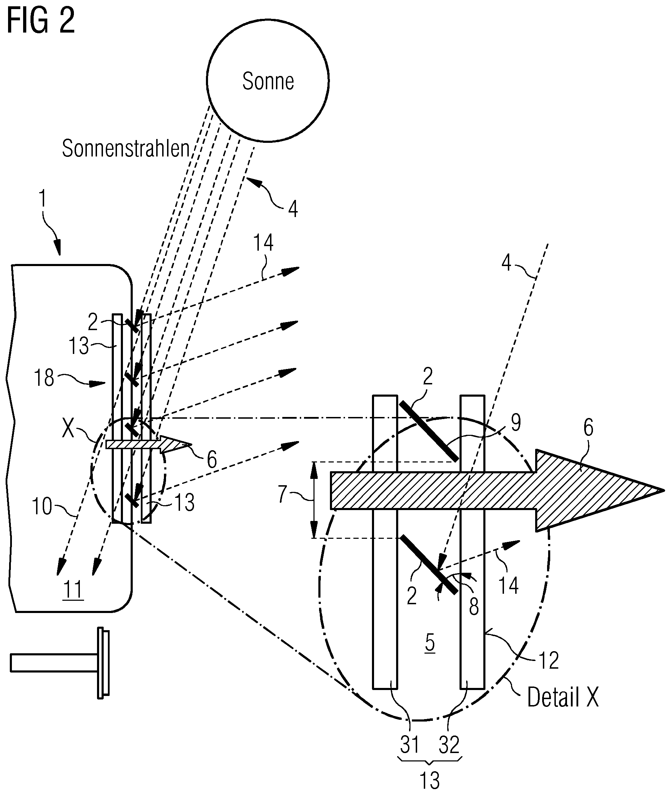

- Figur 2: einen schematischen Teilquerschnitt durch den Fahrgastraum eines Schienenfahrzeugs, wobei gemäß einem anderen Ausführungsbeispiel Reflektor-Lamellen in einem Zwischenraum zwischen zwei Scheiben einer Doppelverglasung angeordnet sind; die Figur 2 und die dazugehörige Beschreibung stellen kein Ausführungsbeispiel der beanspruchten Erfindung dar;

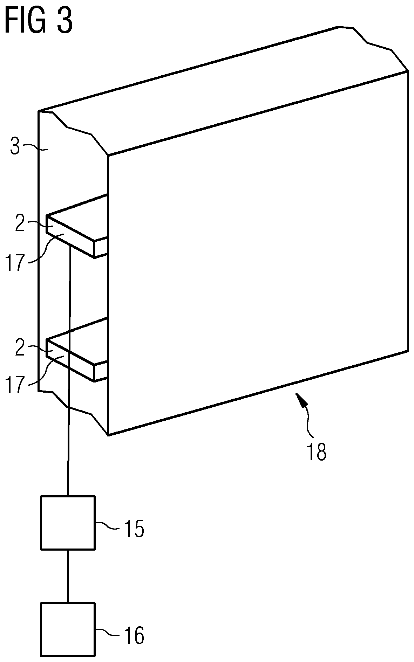

- Figur 3: eine schematische Blockdarstellung einer weiteren Ausführung der Erfindung, wobei die einzelnen Reflektor-Lamellen gleichzeitig als Solarzellen ausgebildet sind und die dabei gewonnene elektrische Energie zum Betrieb von Nebenverbrauchern, zum Beispiel dem Laden einer Batterie, verwendet wird.

### Ausführung der Erfindung

Figur 1 zeigt einen schematischen Teilquerschnitt eines Schienenfahrzeugs 1 mit einem Fahrgastraum 11. An einer Seitenwand des Fahrgastraums 11 ist ein Fahrgastraum-Seitenfenster 18 gezeichnet. In dem dargestellten Ausführungsbeispiel weist das Fahrgastraum-Seitenfenster 18 ein Einscheiben-Glas 3 auf, in welchem mehrere Reflektor-Lamellen 2 eingebettet sind. Die Reflektor-Lamellen 2 sind also in den Glaskörper eingegossen. Der Abstand 7 zwischen benachbarten Reflektor-Lamellen 2 ist so bemessen, dass für Fahrgäste eine horizontale Durchsicht (Pfeil 6) möglich ist. Die Reflektor-Lamellen 2 schränken also die Durchsicht 6 nicht übermäßig ein. Wie in dem Detail X am besten zu sehen, sind die Reflektor-Lamellen 2 geneigt, schließen also mit der Scheibenebene 12 einen Winkel 8 ein. Durch geeignete Wahl der Breite der Lamellen 2, deren Abstand 7 zueinander und des Winkels 8 wird erreicht, dass ein Großteil der einfallenden Sonnenstrahlen 4 an der Reflexionsfläche 9 der jeweiligen Reflektor-Lamelle 2 reflektiert wird (reflektierte Sonnenstrahlung 14 in Figur 1 und Figur 2). Nur ein geringer Teil der Sonnenstrahlen 10 gelangt in den Fahrgastraum 11. Im Ergebnis wird durch die Lamellen 2 also bewirkt, dass der solare Energieeintrag in den Fahrgastraum 11 reduziert ist. Wenn das Fahrzeug 1 in einem subtropischen oder tropischen Gebiet eingesetzt wird, ist damit der technische Aufwand für die Klimatisierung des Fahrgastraums 11 geringer. Es kann ein Klimagerät mit geringerem Gewicht am Schienenfahrzeug 1 eingesetzt werden.

Figur 2 zeigt ein weiteres Ausführungsbeispiel.

Auch hier ist in einem schematischen Teilquerschnitt ein Schienenfahrzeug 1 mit einem Fahrgastraum 11 skizziert, wobei aber hier das Fahrgastraum-Seitenfenster 18 nicht als Einscheiben-Glas sondern als Doppelscheiben-Glas 13 ausgeführt ist. Wie aus der Detaildarstellung X in Figur 2 am besten zu sehen ist, besteht das Doppelscheiben-Glas 13 im Wesentlichen aus zwei Glasscheiben 31,32 und einem dazwischenliegenden Zwischenraum 5. In diesem Zwischenraum 5 befindet sich wieder eine Anordnung von Reflektor-Lamellen 2. Auch hier sind die einzelnen Lamellen 2 in einem Abstand 7 voneinander angeordnet und schließen mit der Ebene 12 des Doppelscheiben-Glasers 13 einen Winkel 8 ein. Die Verhältnisse sind wieder so gewählt, dass einfallende Sonnenstrahlen 4 an Reflexionsflächen 9 der Lamellen 2 in den Außenraum reflektiert werden(siehe reflektierte Sonnenstrahlung 14 in Figur 1 und Figur 2). Nur ein stark verminderter Anteil der einfallenden Sonnenstrahlen 10 gelangt in den Fahrgastinnenraum 11. Auch hier ist der Abstand 7 so bemessen, dass für die Fahrgäste die Durchsicht 6 nicht zu stark eingeschränkt ist.

Beiden Ausführungsbeispielen ist gemeinsam, dass Abstand 7 und Neigungswinkel 8 der einzelnen Reflektor-Lamellen 2 fix vorgegeben ist.

Figur 3 zeigt eine weitere Weiterbildung der Erfindung, wobei die einzelnen Reflektor-Lamellen 2 gleichzeitig als Solar-Lamellen 17 ausgebildet sind. Jede der Lamellen 2 besteht also aus einer Zusammenschaltung von Solarzellen. Die einzelnen Solar-Lamellen 17 sind untereinander und mit einem Steuergerät 15 elektrisch verbunden. Damit wird zum einen wieder eine Abschattung bewirkt, zum anderen wird mit den als Solarzellen ausgebildeten Lamellen 2 elektrische Energie gewonnen, die einem Steuergerät 15 zugeführt ist. Das Steuergerät 15 verwendet die Solarenergie zum Beispiel zum Laden der Batterie 16.

Ebenso können die im Zwischenraum 5 angeordneten Reflektor-Lamellen 2 als Solarlamellen 17 ausgebildet sein und zum Laden der Batterie verwendet werden, was aber zeichnerisch nicht dargestellt ist.

Obwohl die Erfindung im Detail anhand obiger Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

### Zusammenstellung der verwendeten Bezugszeichen

- 1: Schienenfahrzeug
- 2: Reflektor-Lamellen
- 3: Einscheiben-Glas
- 4: einfallende Sonnenstrahlen
- 5: Zwischenraum
- 6: Durchsicht
- 7: Abstand
- 8: Neigungswinkel
- 9: Reflexionsfläche
- 10: Sonnenstrahl
- 11: Fahrgastraum
- 12: Scheibenebene
- 13: Doppelscheiben-Glas
- 14: reflektierter Sonnenstrahl
- 15: Steuereinrichtung
- 16: Batterie
- 17: Solar-Lamelle
- 18: Fahrgastraum-Seitenfenster

- 31: erste Doppelglasscheibe
- 32: zweite Doppelglasscheibe

## Patentansprüche

1. Fahrgastraum-Seitenfenster für ein Fahrzeug, insbesondere ein Schienenfahrzeug, mit einem Einscheiben-Glas (3) und Reflektor-Lamellen (2), die im Einscheiben-Glas (3) eingebettet sind, wobei ein Abstand (7) zwischen benachbarten Reflektor-Lamellen (2) und ein mit der Scheibenebene (12) eingeschlossener Neigungswinkel (8) einer jeden Reflektor-Lamelle (2) fest vorgegeben ist.

2. Fahrgastraum-Seitenfenster nach Anspruch 1, **dadurch gekennzeichnet, dass** jede Reflektor-Lamelle (2) als Solar-Lamelle (17) ausgebildet ist.

3. Fahrgastraum-Seitenfenster nach Anspruch 2, **dadurch gekennzeichnet, dass** jede Solar-Lamelle (17) elektrisch mit einer Steuereinrichtung (15) verbunden ist, wobei die von den Solar-Lamellen (17) erzeugte elektrische Energie einer Batterie (16) zugeführt ist und zum Laden dieser verwendet wird.

4. Schienenfahrzeug mit einem Fahrgastraum (11) an dessen Seitenwänden Fahrgastraum-Seitenfenster nach einem der Ansprüche 1 bis 3 ausgebildet sind.

## Claims

1. Passenger compartment side window for a vehicle, in particular a rail vehicle, comprising a single glass pane (3) and reflector slats (2) which are embedded in the single glass pane (3), wherein a spacing (7) between adjacent reflector slats (2) and an angle of tilt (8) subtended by each reflector slat (2) with the plane (12) of the pane is fixed.

2. Passenger compartment side window according to claim 1, **characterised in that** each reflector slat (2) is designed as a solar slat (17).

3. Passenger compartment side window according to claim 2, **characterised in that** each solar slat (17) is electrically connected to a control device (15), wherein the electrical energy produced by the solar slats (17) is supplied to a battery (16) and used for the charging thereof.

4. Rail vehicle having a passenger compartment (11) on the side walls of which passenger compartment side windows according to one of claims 1 to 3 are implemented.

## Revendications

1. Fenêtre latérale d'espace passager destinée à un véhicule, en particulier un véhicule ferroviaire, comprenant un verre trempé (3) et des lamelles réflectrices (2) qui sont incluses dans le verre trempé (3), dans lequel un espacement (7) entre des lamelles réflectrices (2) adjacentes est spécifié et un angle d'inclinaison (8) d'une lamelle réceptrice (2) respective par rapport au plan de vitrage (12) est spécifié.

2. Fenêtre latérale d'espace passager selon la revendication 1, **caractérisée en ce que** chaque lamelle réflectrice (2) est réalisée sous la forme d'une lamelle solaire (17).

3. Fenêtre latérale d'espace passager selon la revendication 2, **caractérisée en ce que** chaque lamelle solaire (17) est reliée de manière électrique à un dispositif de commande (15), dans lequel l'énergie électrique produite par les lamelles solaires (17) est fournie à une batterie (16) et est utilisée pour le chargement de celle-ci.

4. Véhicule ferroviaire comprenant un espace passager (11) au niveau des parois latérales duquel sont réalisées des fenêtres latérales d'espace passager selon l'une quelconque des revendications 1 à 3.
